# EUROPÄISCHE PATENTSCHRIFT

(11) **EP 2 567 186 B1**
(45) Veröffentlichungstag und Bekanntmachung des Hinweises auf die Patenterteilung: **16.11.2016**
(21) Anmeldenummer: 11784578.4
(22) Anmeldetag: 03.05.2011
(51) Int. Cl.: G01B 21/04, G01B 9/02, G01B 11/14

(54) **MESSGERÄT**
MEASURING DEVICE
APPAREIL DE MESURE

(30) Priorität: 03.05.2010 DE 102010019656
(43) Veröffentlichungstag der Anmeldung: 13.03.2013
(73) Patentinhaber: Etalon AG, 38116 Braunschweig (DE)
(72) Erfinder: SCHWENKE, Heinrich, 38100 Braunschweig (DE); WISSMANN, Mark, 38100 Braunschweig (DE)
(74) Vertreter: Stornebel, Kai
(86) Internationale Anmeldenummer: PCT/DE2011/001032
(87) Internationale Veröffentlichungsnummer: WO 2012/010112

(56) Entgegenhaltungen:
- US-A- 5 428 446
- US-A- 5 604 593
- US-A1- 2005 018 205

## Beschreibung

Die Erfindung betrifft ein Messgerät zur Überprüfung positionierender Maschinen auf geometrische Fehler zwischen zwei Drehgelenken mit Lagerkugelkörpern, die über ein teleskopierbares Verbindungselement mechanisch miteinander verbunden sind, und einer Einrichtung zur optischen Längenmessung des Abstandes der Kugelkörper voneinander mit zumindest einer Reflektoreinrichtung und einem Messstrahl. Mit einem solchen Messgerät ist es möglich, zwei Drehgelenke mechanisch miteinander zu verbinden, damit eine Kalibrierung und Überprüfung der Genauigkeit von Positioniermaschinen und Robotern oder anderen Werkzeugmaschinen durchgeführt werden kann.

Bei der Kalibrierung technischer Mehrkörpersysteme werden unterschiedliche Messtechniken eingesetzt. Neben einem Laserinterferometer kann ein Tracking-Interferometer, ein Geradheits-Interferometer, Winkelmesssysteme, Geradheitsnormale, Neigungswaagen, Winkelnormale und Kugelstäbe eingesetzt werden. In der ISO 230-1 werden verschiedene Techniken zur Prüfung und Kalibrierung von Werkzeugmaschinen beschrieben.

Eine weitere Methode zur Überprüfung und Kalibrierung technischer Mehrkörpersysteme basiert auf dem Multilaterationsverfahren, das eine vollständige Erfassung der geometrischen Fehlerparameter einer Positioniermaschine erlaubt, wenn diese sich hinreichend genau durch ein geeignetes kinematisches Modell beschreiben lässt. Ein solches Verfahren ist in der EP 16 58 471 A1 beschrieben. Auf entsprechend ausgestatteten Maschinensteuerungen können Parameter dann optional als Korrekturdaten hinterlegt werden, wodurch eine volumetrische Kompensation der Abweichung erfolgt und somit die Genauigkeit der Positionierung gesteigert wird. Für die Berechnung der Fehlerparameter werden bei diesen Verfahren zahlreiche Längenmessungen zwischen einem auf der Maschine feststehenden Referenzpunkt und einem durch die Maschine bewegten Referenzpunkt benötigt. Der bewegliche Referenzpunkt befindet sich in der Regel am Tastkopf eines Koordinatenmessgerätes oder an einer Spindel an einer Werkzeugmaschine. Die Längenmessungen finden an zuvor definierten Koordinaten innerhalb des verfügbaren Arbeitsvolumens der Positioniereinrichtung statt. Bei sequenziellen Multilaterationsverfahren wird dieser Messablauf für mehrere Positionen des feststehenden Referenzpunktes wiederholt, um mehrere mathematisch nutzbare Informationen aus verschiedenen Blickrichtungen des Messgerätes auf den bewegten Referenzpunkt zu erhalten.

Verfahrensbedingt sind keine Absolutdistanzmessungen zwischen den Referenzpunkten erforderlich, wodurch auch der Einsatz von Systemen mit relativer Längenmessung erlaubt wird. Üblicherweise werden zur Durchführung des Verfahrens mobile Messgeräte verwendet. Ein geeignetes mobiles Messgerät ist ein Lasertracer, das in Kombination mit einer geeigneten Software durch zahlreiche Längenmessungen die für eine Kompensation benötigten Fehlerparameter ermittelt. Die Längenmessung erfolgt mit einem kompakten Laserinterferometer mit einer externen, stabilisierten He-Ne-Laserlichtquelle. Die erforderliche kontinuierliche Ausrichtung des Laserstrahls zu einem optischen Reflektor erfolgt durch eine automatische, motorische Nachführvorrichtung. Nachteilig an dem Lasertracer ist neben seiner kostenintensiven Ausgestaltung aufgrund aufwändiger Komponenten die relativ große Baugröße, was insbesondere bei kleinen Positioniermaschinen zu funktionalen Nachteilen führt. Darüber hinaus sind gegenwärtig nur optische Reflektoren mit einem maximalen Winkelbereich von 160° erhältlich, was den nutzbaren Winkelbereich des Messgerätes einschränkt.

Neben motorisch nachgeführten Messsystemen existieren auch Längenmesssysteme, bei denen zwei Referenzelemente, überwiegend Kugeln eines Drehgelenkes, durch eine mechanische Verbindung miteinander gekoppelt sind. Bei einem sogenannten Teleskop-Kugelstab handelt es sich um eine etablierte Messvorrichtung zur Prüfung der Positionier- und Bahngenauigkeit von CNC-gesteuerten Positioniermaschinen, zu denen auch Koordinatenmessmaschinen oder Werkzeugmaschinen zählen. Ein solcher Teleskop-Kugelstab ist in der US 4,435,905 beschrieben. Eine stabhohe mechanische Steifigkeit mit nur einem Freiheitsgrad für lineare Bewegungen ist an seinen Enden mit Lagerkugelkörpern versehen. Ein integrierter Wegaufnehmer erfasst kontinuierlich die Abstandsänderung der beiden Kugeln zueinander. Die beiden Kugeln stellen in Kombination mit geeigneten Lagerungen ein Drehgelenk dar, wobei der Drehpunkt dem Mittelpunkt eines Lagerkugelkörpers entspricht. Befindet sich eine der Kugelaufnahmen an einem festen Ort und eine weitere an einem bewegten Teil der Positioniermaschine, kann diese sich auf angenähert kugelförmigen oder kreisförmigen Bahnen im Raum soweit bewegen, solange nicht die maximale bzw. minimale Auszugslänge des Kugelstabes überschritten oder unterschritten wird. Bei dem sogenannten Kreisformtest für Werkzeugmaschinen wird der Maschinenkopf, an dem einer der beiden Lagerkugelkörper befestigt ist, auf einer Kreisbahn um die feststehende Lagerkugelaufnahme bewegt, gleichzeitig wird mit dem Teleskop-Kugelstab die Relativbewegung der Kugeln zueinander gemessen. Die Differenz zwischen den gewonnenen Messdaten und den Sollwerten einer idealen Kreisbahn erlaubt Rückschlüsse auf die lokale Genauigkeit der Bewegung einer Maschine am Ort der Messung. Das integrierte Längenmesssystem weist einen linearen Messbereich von einigen Millimetern auf. Dadurch sind Maschinenbewegungen im Wesentlichen auf Kreisbahnen oder Kugelschalen beschränkt, das Gerät ist daher für eine Maschinenkalibrierung nach dem Multilaterationsverfahren, das Messdaten aus dem gesamten Volumen verarbeitet, nicht geeignet.

Die US 5,428,446 beschreibt ein Messgerät mit einem linearen Messbereich, das eine Verwendung in einem Multilaterationsverfahren ermöglicht. Das System besitzt einen rohrförmigen Teleskopauszug, in dessen Inneren ein Messstrahl eines Laserinterferometers geführt wird. Ein parallel angeordneter Teleskopstab verhindert eine Verdrehung der Lagerkugelkörper zueinander. Aufgrund des relativ geringen Auszugsbereiches, der durch die Länge des aufnehmenden Teleskoprohres begrenzt ist, ist das System jedoch nicht geeignet, den gesamten Bearbeitungsraum einer Positioniermaschine vollständig zu erfassen. Bei der Verwendung von Teleskopauszügen ist das Messgerät aufgrund von Eigengewicht, Elastizität der Komponenten und Lagerspiel zwangsläufig einem Durchhang unterworfen, der je nach Länge und mechanischer Stabilität zu Abweichungen der Positionierung der ausgezogenen Kugel von einer geraden Linie im Bereich mehrerer Millimeter führen kann. Dies führt bei einem handelsüblichen interferometrischen Längenmesssystem mit einem kollimierten Messstrahl, beispielsweise gemäß US 5,428,446, bei großen Messlängen zu einem Messfehler. Gleichzeitig führt diese Durchbiegung des Auszuges zu einer Drehbewegung der Lagerkugelkörper in den Drehgelenken, was die Abweichungen zusätzlich erhöht. Aufgabe der vorliegende Erfindung ist es, ein optisches Messgerät bereitzustellen, das auch bei der unvermeidlichen mechanischen Verformung noch exakte Messwerte für eine Abstandsänderung zwischen zwei Drehgelenken liefert und darüber hinaus ein großes Auszugsverhältnis des Verbindungselementes gewährleistet.

Die US 2005/018205 A1 betrifft eine Positionsmessvorrichtung zur Ermittlung einer Winkelposition eines beweglichen Elementes im Verhältnis zu einem Grundkörper. Eine Lichtquelle ist fest in dem Drehmittelpunkt eines Gelenkes angeordnet und sendet einen divergenten Lichtstrahl entlang des Trägers, Innerhalb des Lichtstrahls ist im Drehzentrum eines zweiten Gelenks ein Detektor angeordnet, wobei ein Gitter in einer festen Entfernung von dem Detektor an dem Grundkörper befestigt ist.

Die US 5,604,593 A1 betrifft eine gattungsgemäße Vorrichtung mit einer festgelegten Struktur und einer relativ dazu beweglichen Struktur Die bewegliche Struktur ist mit der festgelegten Struktur über sechs längenveränderliche Beine miteinander verbunden. Die Länge der Beine legt die relative Position und die Orientierung der Strukturen zueinander fest. Die Längen der Beine werden durch Laserinterferometer bestimmt, um die Genauigkeit der Messung zu erhöhen, ist ein Retroreflektor im Drehzentrum einer Lagerstelle eines Beines angeordnet.

Erfindungsgemäß wird diese Aufgabe durch ein Messgerät mit den Merkmalen des Hauptanspruches gelöst. Vorteilhafte Ausgestaltungen und Weiterbildungen der Erfindung sind in den Unteransprüchen aufgeführt.

Die Erfindung löst die Aufgabe durch ein Messgerät zur Überprüfung positionierender Maschinen auf geometrische Fehler zwischen zwei Drehgelenken, das Messgerät umfassend: zwei Lagerkugelkörper, ein teleskopierbares Verbindungselement, wobei die Lagerkugelkörper über das teleskopierbare Verbindungselement mechanisch miteinander verbunden sind und mit geeigneten Lagerungen Drehgelenke bilden, wobei die Drehpunkte den Mittelpunkten der Lagerkugelkörper entsprechen, eine Einrichtung zur optischen Längenmessung des Abstandes der Lagerkugelkörper voneinander, die zumindest eine Reflektoreinrichtung und einen Messstrahl aufweist, wobei die zumindest eine Reflektoreinrichtung in einem ersten der beiden Lagerkugelkörper dergestalt angeordnet ist, dass der erste Bezugspunkt für die optische Längenmessung mit dem Mittelpunkt des ersten Lagerkugelkörpers übereinstimmt, das Messgerät weiterhin umfassend: eine Steuereinrichtung, eine dieser zugeordnete Photodetektoreinheit und zumindest eine optische Ablenkeinrichtung, die dem Messstrahl zugeordnet ist, wobei die Steuereinrichtung dazu eingerichtet ist, die Ablenkeinrichtung basierend auf dem Signal der Photodetektoreinheit so zu steuern, dass der Messstrahl der Reflektoreinrichtung nachgeführt wird, wenn diese aus einer Ausgangslage verlagert wird.

Idealerweise findet eine Längenmessung unmittelbar zwischen den beiden Referenzpunkten statt, vorliegend den Drehpunkten des Drehgelenkes, da auf diese Weise wesentliche Fehlereinflüsse vermieden und die Messunsicherheiten verringert werden können. Es ist daher vorgesehen, dass zumindest in einem der beiden Zentren der Lagerkugelkörper ein optisches Referenzelement angebracht ist, das zur Bestimmung der Verschiebung zwischen den beiden Lagerkugelkörpern und damit auch der beiden Drehgelenke dient. Durch die konzentrische Anordnung, so dass der Bezugspunkt für die optische Längenmessung mit dem Drehpunkt des Drehgelenkes und damit mit dem Zentrum des Lagerkugelkörpers zusammenfällt, führen Verformungen des Messgerätes und insbesondere des Verbindungselementes nicht zu Veränderungen der gemessenen Länge, wenn durch das Messgerät der relative Abstand der beiden Referenzelemente zueinander erfasst wird. Das Messgerät sieht vor, dass dem Messstrahl zumindest eine optische Ablenkeinrichtung zugeordnet ist, über die der Messstrahl einem aus der Ausgangslage verlagerten Reflektor nachgeführt werden kann, wobei der Drehpunkt der Nachführung nicht in dem Drehpunkt des Drehgelenkes liegen muss, sondern auch außerhalb des mechanischen Systems liegen kann. Die Nachführung erfolgt dabei durch eine Verstellung einer Ablenkeinrichtung des Messstrahls, beispielsweise eines von außen eingekoppelten Messstrahls, der über Spiegel und/oder durch Strahlteiler in den Messarm eingekoppelt und in Abhängigkeit von der Verlagerung des Messreflektors verstellt wird, so dass der Messstrahl dem Messreflektor stets folgt. Auf der Grundlage der Verstellung und/oder der Veränderung der Laufzeit des Messstrahls aufgrund der Längenänderung bei einer Verlagerung kann immer exakt die relative Längenänderung gemessen werden, ohne dass an dem mechanischen Messsystem etwas verändert werden muss. Allein durch die Verstellung des Einfallwinkels des eingekoppelten Messstrahls lässt sich eine präzise Messung gewährleisten. Erfindungsgemäß ist einer Steuereinrichtung für die Nachführung eine Photodetektoreinheit zugeordnet.

Eine Variante der Erfindung sieht vor, dass in beiden Lagerkugelkörpern eine Reflektoreinrichtung dergestalt angeordnet ist, dass die Bezugspunkte für die optische Längenmessung mit den Drehpunkten der Drehgelenke übereinstimmen, so dass bei einer Einspiegelung des Messstrahls eine Reflektion von beiden Reflektoreinrichtungen erfolgt, ohne dass die Verformungen des Verbindungselementes Einflüsse auf die Genauigkeit der Längenmessungen haben. Die Reflektoreinrichtung kann in der Mitte des jeweiligen Lagerkugelkörpers angeordnet sein, wobei in der Mitte des jeweiligen Lagerkugelkörpers beispielsweise ein Tripelspiegelreflektor oder ein Katzenaugen-Reflektor versenkt ist, so dass das optische Zentrum des Reflektors mit dem mechanischen Zentrum der Gelenkkugel oder des Lagerkugelkörpers zusammenfällt. Durch die Ausgestaltung des Reflektors als Tripelspiegelreflektor oder Katzenaugen-Reflektor, z.B. in der Ausgestaltung als hochbrechender und rückwärtig spiegelnd beschichteter Kugelreflektor, ist es möglich, einen einfallenden Lichtstrahl stets parallel zu seiner einfallenden Richtung zurückzuwerfen, auch wenn der Messstrahl unter verschiedenen Winkeln auf den Reflektor fällt. Bei einem nicht zentrischen Auftreffen des Messstrahls wird dieser entsprechend stark parallel versetzt zurückgeworfen. Dadurch ist es möglich, dass durch die Reflektoreinrichtung ein einfallender Messstrahl unabhängig von der Orientierung des Lagerkugelkörpers in die Einfallsrichtung reflektiert wird.

Der Messstrahl kann auf den Kugelmittelpunkt des Lagerkugelkörpers fokussiert sein.

Eine Weiterbildung der Erfindung sieht vor, dass dem Messstrahl ein Aktuator zugeordnet ist, um eine Nachführung für laterale Auslenkungen eines Lagerkugelkörpers oder eines Reflektors vorzunehmen, wobei der Drehpunkt der Nachführung in dem Drehpunkt eines Drehgelenkes liegt. Dadurch ist es möglich, die Fehlausrichtung des Messstrahls in Bezug auf die Reflektoreinheit auf einen minimalen Wert auszuregeln.

Dem Aktuator kann eine Steuereinrichtung für die Nachführung zugeordnet sein, wobei der Steuereinrichtung eine Photodetektoreinheit zugeordnet ist, über die die seitliche Auslenkung des Lichtflecks aus der Nulllage heraus ermittelt werden kann. Über diese Photodetektoreinheit ist dann die präzise Nachregelung möglich.

In einer Weiterbildung der Erfindung ist es vorgesehen, dass in dem Messstrahl eine Einrichtung zur Aufweitung des Messstrahls angeordnet ist. Der Messstrahl kann entweder parallel aufgeweitet werden, um eine größere Fläche abzudecken, oder zu einer Kugelwelle, deren Mittelpunkt in dem Drehpunkt eines Drehgelenkes angeordnet ist. Dadurch ist es möglich, eine konzentrische Kugelwelle mit dem Mittelpunkt des Drehgelenkes zu realisieren, so dass sich von dort aus der sich aufweitende Messstrahl in Richtung auf die Reflektoreinheit ausbreitet. Dadurch erhöht sich die laterale Toleranz der Lage der Reflektoreinheit, da auch die Abstandsänderung bei lateraler Verschiebung interferometrisch exakt erfasst werden kann. Durch die Anordnung der Reflektoreinheit im Zentrum des Lagerkugelkörpers wird, solange sich die Reflektoreinheit innerhalb des aufgeweiteten Messstrahls befindet, ein Teilausschnitt des Messstrahls zu der optischen Längenmesseinrichtung, insbesondere der interferometrischen Messeinheit, zurückgeworfen.

Die Intensität der von den Kugelwellen zurückgeworfenen Strahlung skaliert dabei umgekehrt proportional zum Abstandsquadrat der beiden Lagerkugelkörper und der Drehlager zueinander.

Bei einer parallelen Aufweitung des Messstrahls durch eine geeignete Optik trifft eine ebene Welle auf die Reflektoreinheit. Dort wird von der Reflektoreinheit ein Teilausschnitt des Messstrahls parallel zum einfallenden Stahl zur optischen Längenmesseinrichtung, insbesondere dem Interferometer zurückgeworfen. Der messtechnisch relevante Lateralversatz des reflektierten Messstrahls wird mit einer positionsempfindlichen Detektoreinrichtung, beispielsweise einer positionsempfindlichen Photodiode registriert. Der durch den Lateralversatz verursachte Längenmessfehler wird in einer Steuerungssoftware oder einer Messsoftware korrigiert.

Um ein besonders hohes Aspektverhältnis zu erreichen, also das Verhältnis von Maximallänge zur Mindestlänge des Messgerätes, kann das teleskopierbare Verbindungselement zumindest einen der Lagerkugelkörper auf der der gegenüberliegenden Lagerkugelkörper abgewandten Seite überkragen. Dadurch kann die Führungslänge des Teleskopauszuges erhöht werden, ohne den Mindestabstand der beiden Kugelmittelpunkte der Lagerkugelkörper, welche in dem Messgerät als Anfangspunkt und Endpunkt der Längenmessung dienen, zu erhöhen.
Zur mechanisch steifen Ausgestaltung ist es vorgesehen, dass das teleskopierbare Verbindungselement mehrere, parallel zueinander angeordnete Auszüge aufweist, an denen die Lagerkugelkörper befestigt sind. Dadurch kann die Steifigkeit gegen eine mechanische Verformung vergrößert werden. Es können zwei oder drei Auszüge parallel zueinander angeordnet sein, die durch Verstrebungen miteinander verbunden sein können.

Ebenfalls ist es möglich, dass zwei parallele Auszüge über eine Scherenkinematik miteinander gekoppelt sind, um eine präzisere Zuordnung der Auszüge mehrerer Auszugselemente zu erreichen.

Bei einer ungedämpften Bewegung kann eine ungeordnete Auszugsreihenfolge und darüber hinaus ein harter Endanschlag entstehen, was das Messergebnis beeinträchtigen kann. Daher kann weiterhin vorgesehen sein, dass das Verbindungselement eine Dämpfereinrichtung aufweist, um beispielsweise ein ruckartiges Herunterfallen einzelner Segmente des Verbindungselementes bei einem Wechsel der Blickrichtung der Messvorrichtung in eine senkrechte Position zu vermeiden. Konstruktiv kann dies bei abgeschlossenen Auszügen und Auszugselementen des Verbindungselementes durch variable Luftöffnungen mit einem definierten Durchmesser oder durch eine geschwindigkeitsproportionale Dämpfung über Magnete und einem bremsenden Wirbelstromeffekt in den sich relativ zu dem Magneten bewegenden Auszugssegmenten erreicht werden.

Bei einer Kopplung der einzelnen Segmente des Verbindungselementes über eine Scherenkinematik ist eine Bewegungsdämpfung nicht notwendig, da über die Scherenkinematik eine mechanische Zwangskopplung der einzelnen Segmente des Mehrfachauszuges realisiert wird. Sinnvollerweise werden bei der Scherenkinematik geeignete Hebelverhältnisse verwendet, um einen maximalen und minimalen Abstand der Lagerkugelkörper zu erreichen. Endanschläge beim Erreichen des maximalen bzw. minimalen Verfahrweges sind bei geeigneter Verwendung der Erfindung nicht erforderlich. Alternativ können Zahnräder, Zahnstangen oder Seilzüge und Umlenkrollen zur Verwirklichung eines geordneten Auszuges eingesetzt werden.

Bei der Verwendung teleskopierbarer Auszüge mit mehr als einem ausziehbaren Element und einem ungeordneten Auszug, beispielsweise ohne eine Scherenkinematik, kann das Problem eines mechanischen Anschlagens auftreten. Die einzelnen Segmente können auf andere Segmente aufschlagen, wenn die einzelnen Segmente ihren maximalen bzw. minimalen Verfahrbereich beim Auseinanderziehen oder beim Zusammenschieben des Messgerätes erreichen. Alternativ kann aufgrund der Schwerkrafteinwirkung einzelner Segmente das Anschlagen erfolgen. Ungedämpfte Anschläge von Segmenten können durch das Messgerät sowohl auf das interferometrisches Messsystem als auch auf die zu kalibrierende Maschine übertragen werden, was zu vermeiden ist. Daher werden harte Endanschläge durch eine gleichpolige Anordnung von Magneten innerhalb des Verbindungselementes bzw. innerhalb der Segmente der Auszüge verhindert. Magnete haben den Vorteil einer progressiven Kraft- Weg- Kennlinie bei ihrer Annäherung, darüber hinaus benötigen sie nur einen geringen zusätzlichen Bauraum. Ebenfalls sind Federelemente oder dergleichen vorgesehen.

Durch eine unterschiedliche räumliche Ausrichtung des Messgerätes bei dem Abfahren verschiedener Positionen durch den Endeffektor der Maschine wirkt das Messgerät über das Drehgelenk und den Endeffektor mit unterschiedlichen Kräften auf die zu kalibrierende Positioniermaschine ein. Gegengewichte auf der zum Endeffektor entgegengesetzten Seite des feststehenden Drehgelenkpunktes können die unterschiedlichen Kräfte ausgleichen, da über die Hebelwirkung die Krafteinleitung auf den Endeffektor reduziert oder vermieden wird.

Vorzugsweise wird der Abstand der Gegengewichte von dem Drehpunkt des feststehenden Drehgelenkpunktes automatisch derartig eingestellt, dass die sonst wechselnde Krafteinwirkung am Endeffektor der zu kalibrierenden Positioniermaschine konstant und/oder nahe Null gehalten wird. Dies kann entweder durch eine rein mechanische Vorrichtung geschehen, die mit dem Endeffektor mechanisch gekoppelt ist, oder durch eine motorische Einheit, die den notwendigen Abstand des Gegengewichtes zum Drehpunkt aus der aktuellen Auszugslänge und gegebenenfalls aus dem Neigungswinkel des Verbindungselementes ermittelt. Ebenfalls können Kraftsensoren in dem Endeffektor integriert sein, wodurch eine unabhängige elektronische Regelstrecke realisiert werden kann, die sich stets auf eine konstante Kraftwirkung auf die Positioniermaschine einregelt.

Die mit der Erfindung erziehlten Vorteile bestehen insbesondere darin, dass Lateralversätze und kleine Drehbewegungen des Reflektors am Endeffektor des Teleskopauszuges aufgrund mechanischer Verformungen durch zum Beispiel sich verändernde Lastitutionen und auftretende Lagerspiele automatisch ausgeriegelt oder durch die Strahlgeometrie vermieden werden. Durch die Kenntnis des Lateralversatzes kann die Längenmessung korrigiert werden, wobei gleichzeitig das bei einigen anderen Vorrichtungen notwendige manuelle Feinausrichten eines Laserstrahls, der als Messstrahl häufig verwendet wird, vollkommen entfallt. Dadurch können Teleskop-Mehrfachauszüge verwendet werden, da eine hohe mechanische Steifigkeit und Präzision der Linearführung des Verbindungselementes zum Erreichen kleiner Messunsicherheiten nicht mehr erforderlich ist. Ebenso ist es dadurch möglich, einen jeweils für die Messanforderungen idealen Teleskopauszug zu verwenden, wenn eine Einheit aus Interferometer und Strahlnachführung vom Teleskop aus mittels einer geeigneten mechanischen Koppelvorrichtung abnehmbar ist. Dann kann diese Einheit auf einen anderen Teleskopauszug aufgesetzt werden, ebenfalls ist ein Betrieb des Interferometers und der Strahlnachführung ohne Teleskopauszug mit einer stationären Vorrichtung möglich.

Durch die konzentrische Anordnung der optischen Reflektoren in den Drehmittelpunkten, wodurch die Messstrecke der direkten Verbindungslinie beider Referenzpunkte entspricht, wird der sogenannte Sinus- und Kosinusfehler vermieden, der durch kleine Abweichungen zwischen dem Referenzpunkt und dem Drehpunkt des Kugelgelenkes bei Winkelbewegungen entsteht. Dadurch wird die Messgenauigkeit gewährleistet. Die Anordnung erlaubt zudem eine freie thermische Ausdehnung des Messgeräts, da die Messstrecke zwischen den beiden Referenzpunkten unabhängig davon ist. Daher ist es auch möglich, für den Gerätaufbau ein breites Materialspektrum einzusetzen und die Auszugslängen den messtechnischen Gegebenheiten anzupassen, ohne dabei die Funktion zu beeinträchtigen.

Das Messgerät kann in einer Variante vorsehen, dass dem Messstrahl zumindest eine optische Ablenkeinrichtung zugeordnet ist, über die der Messstrahl einem aus der Ausgangslage verlagerten Reflektor nachgeführt werden kann, wobei der Drehpunkt der Nachführung nicht in dem Drehpunkt des Drehgelenkes liegen muss, sondern auch außerhalb des mechanischen Systems liegen kann. Die Nachführung erfolgt dabei durch eine Verstellung einer Ablenkeinrichtung des Messstrahls, beispielsweise eines von außen eingekoppelten Messstrahls, der über Spiegel und/oder durch Strahlteiler in den Messarm eingekoppelt und in Abhängigkeit von der Verlagerung der Messreflektors verstellt wird, so dass der Messstrahl dem Messreflektor stets folgt. Auf der Grundlage der Verstellung und/oder der Veränderung der Laufzeit des Messstrahls aufgrund der Längenänderung bei einer Verlagerung kann immer exakt die relative Längenänderung gemessen werden, ohne dass an dem Mechanischen Messsystem etwas verändert werden muss. Allein durch die Verstellung des Einfallwinkels des eingekoppelten Messstrahls lässt sich eine präzise Messung gewährleisten..

Die Ablenkeinrichtung kann als verschwenkbarer und/oder verschieblicher Spiegel ausgebildet sein, um Drehversatz und Lateralsversatz ausgleichen zu können und eine präzise Nachfolgung des Messstrahles zu erreichen. Eine Steuereinheit kann mit einem der Ablenkeinrichtung zugeordneten Aktuator und einer positionssensitiven Detektoreinheit gekoppelt sein, um eine Nachführung des Messstrahls durch Verstellung der Ablenkeinrichtung in Abhängigkeit von Sensorwerten der Detektoreinheit zu steuern. Dadurch wird ein geschlossener Regelkreis bereitgestellt, der in Abhängigkeit von den Werten der Detektoreinheit automatisch eine Nachführung des Messstrahls auf den sich verlagernden Messreflektor bewirkt.

Eine Weiterbildung der Erfindung sieht vor, dass die positionssensitive Detektoreineinheit im doppelt gespiegelten Drehpunkt der Ablenkeinrichtung positioniert ist und dort vorzugsweise die Nulllage definiert wird. Der Drehpunkt der Ablenkeinrichtung wird an Strahlteiler gespiegelt. Bei einer entsprechenden Orientierung der Strahlteiler und einer Ausrichtung der Detektoreinheit und der Steuereinheit kann dadurch gewährleistet werden, dass nur der fehlerverursachende Reflektorversatz durch die Detektoreinheit richtungsrichtig erfass wird. Dadurch kann eine richtungsrichtige Korrektur der Ablenkung des Messstrahls durch die Steuereinheit vorgenommen und die Ablenkeinrichtung verstellt werden, so dass der Messstrahl stets parallel zu den optischen Zentren der Reflektoren verläuft, wodurch eine präzise Messung einer Längenänderung ermöglicht wird.

Nachfolgend wird die Erfindung anhand der Figuren näher erläutert. Es zeigen:
- Fig. 1a: eine perspektivische Darstellung des teleskopierbaren Verbindungselementes mit Lagerkugelkörpern;
- Fig. 1b: das Verbindungselement in unterschiedlichen Auszugslängen;
- Fig. 2a: eine schematische Darstellung eines Drehgelenks;
- Fig. 2b: eine Draufsicht auf eine mechanische Dreipunktlagerung für Kugeln;
- Fig. 3a: eine Idealdarstellung eines Verbindungselementes;
- Fig. 3b: eine übertriebene Darstellung der Verformung eines teleskopierten Verbindungselementes;
- Fig. 4a: Beispiele von Reflektoreinheiten;
- Fig. 4b: eine Erläuterung der Längenmessfehler durch Exzentrizität;
- Fig. 5: einen Grundaufbau eines Interferometers mit Strahlengang;
- Fig. 6: eine schematische Darstellung eines Messgerätes mit automatischer Messstrahlennachführung;
- Fig. 7: ein Messgerät mit konzentrischer Kugelwelle;
- Fig. 8: ein Messgerät mit einem aufgeweiteten Messstrahl;
- Fig. 9a: einen Endanschlag mit gleichpoligen Magneten;
- Fig. 9b: einen Endanschlag mit einem Federelement;
- Fig. 10a: eine Darstellung von Auszugsegmenten mit Luftdämpfung;
- Fig. 10b: eine Darstellung einer Bewegungsdämpfung mit Wirbelstrom;
- Fig. 11: ein Verbindungselement mit Scherenkinematik im teleskopierten und ausgefahrenen Zustand;
- Fig. 12a: ein Messgerät mit Gegengewicht im teleskopierten Zustand;
- Fig. 12b: ein Messgerät mit Gegengewicht im eingefahrenen Zustand; sowie
- Fig. 13: eine Variante der Erfindung mit einer Messstrahlnachführung.

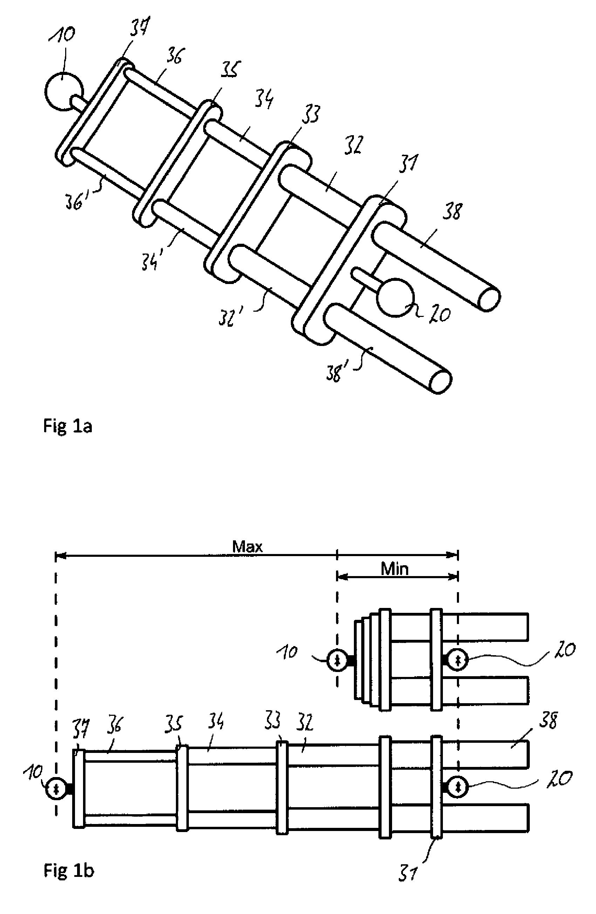

In der Figur 1 ist in einer perspektivischen Darstellung der Grundaufbau eines Verbindungselementes 30 mit zwei daran befestigten Lagerkugelkörpern 10, 20 gezeigt. Das Verbindungselement 30 besteht im dargestellten Ausführungsbeispiel aus zwei parallelen Auszügen, die aus mehreren Auszugselementen 32, 34, 36, 32', 34', 36' bestehen, wobei das erste Auszugselement 32, 32' einen über die erste Querstrebe 31 hinausragenden Abschnitt 38, 38' aufweist. Alternativ kann der nach hinten überstehende Abschnitt 38, 38' auch als separates Element ausgebildet sein, in das das erste Auszugselement 32, 32' einschiebbar ist. Die beiden Auszüge sind über Querversteifungen 31, 33, 35, 37 miteinander verbunden. Die Lagerkugelkörper 10, 20 sind an den äußeren Querversteifungen 31, 37 festgelegt. Üblichweise wird ein Lagerkugelkörper 20 an einem Lager innerhalb eines Arbeitsraumes einer Positioniermaschine positioniert, während der andere Lagerkugelkörper 10 an einem Endeffektor befestigt wird und über den Endeffektor verschiebende Positionen anfährt. Der nicht an dem Endeffektor angeordnete Lagerkugelkörper 20 wird nachfolgend als stationärer Lagerkugelkörper bezeichnet, auch wenn der Lagerort im Verlauf der Messungen verändert werden kann. Die Bezeichnung dient daher lediglich zur Unterscheidung der beiden Lagerkugelkörper 10, 20 und ist nicht einschränkend auszulegen.

In der Figur 1 ist zu erkennen, dass auf Seiten des stationären Lagerkugelkörpers das Verbindungselement über den Lagerkugelkörper 20 herausragt, so dass die übrigen Segmente 32, 34, 36, 32', 34', 36' in die überkragenden Segmente 38, 38' hinein verschoben werden können. Die unterschiedlichen Positionen und Auszugslängen sind in der Figur 1b dargestellt. In der oberen Darstellung ist eine minimale Auszugslänge dargestellt, in der unteren Darstellung eine maximale Auszugslänge. Durch die mehrstufige Ausführung der teleskopierbaren Auszüge ist es möglich, ein sehr großes Aspektverhältnis, also ein großes Verhältnis zwischen der maximalen Auszugslänge und der minimalen Auszugslänge zu realisieren. Das aufnehmende Segment 38, 38' des jeweiligen Auszuges erstreckt sich über den Drehpunkt des stationären Lagerkugelkörpers 20 hinaus, so dass die teleskopierbaren Auszüge 32, 34, 36, 32', 34', 36' vollständig aufgenommen werden können. Das überkragende Segment 38 dient ebenfalls als Gegengewicht, so dass auch im ausgezogenen Zustand der Endeffektor mit einer möglichst geringen Gewichtskraft belastet wird. Alternativ ist es möglich, dass die ersten Segmente 32, 38, 32', 38' als ein einteiliges Rohr ausgebildet sind, so dass die übrigen Segmente 34, 36, 34', 36' in das beidseitig über den stationären Lagerkugelkörper 20 hinausstehende Segment eingeschoben werden können.

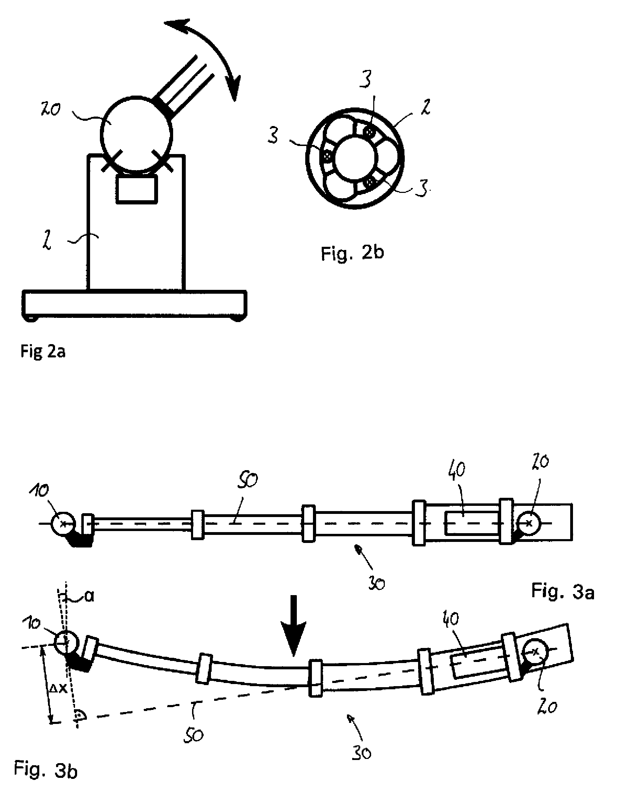

In den Figuren 2a und 2b sind ein Drehgelenk 2 in Gestalt eines sogenannten Kugelnestes mit dem darauf angeordneten Lagerkugelkörper 20 dargestellt. Das Drehgelenk weist zumindest zwei rotatorische Freiheitsgrade auf, vorteilhafterweise sind drei rotatorische Freiheitsgrade vorgesehen. In der Figur 2 ist die Ausbildung des Drehgelenkes an dem statischen Lagerkugelkörper 20 dargestellt. Die Ausbildung des Drehgelenkes mit dem mobilen Lagerkugelkörper 10 an dem Endeffektor ist nicht dargestellt, auch hier sind zumindest zwei rotatorische Freiheitsgrade, vorzugsweise drei rotatorische Freiheitsgrade vorgesehen, so dass das Verbindungselement 30 eine mechanische Verbindung in veränderlicher Länge zwischen den beiden Drehgelenken herstellt, die durch die Lagerkugelkörper 10, 20 und durch die jeweiligen Aufnahmen realisiert werden. In der Figur 2b ist eine Draufsicht auf eine mögliche Lagerstelle gezeigt. Es handelt sich dabei um eine magnetisch vorgespannte, mechanische Dreipunktlagerung mit drei Lagerpunkten 3, wobei sich der Drehpunkt des Drehgelenkes im Mittelpunkt des Lagerkugelkörpers 20 befindet.

In den Figuren 3a und 3b ist die Auswirkung einer mechanischen Deformation des Verbindungselements 30 dargestellt. In der Figur 3a ist die geometrisch ideale Ausgestaltung des Verbindungselements 30 gezeigt. Ebenfalls ist dargestellt, dass im Bereich des stationären Lagerkugelkörpers 20 eine Einrichtung 40 zur optischen Längenmessung angeordnet ist. Eine solche Einrichtung ist insbesondere als ein Lasereinterferometer ausgebildet. In der oberen Darstellung ist die ideale gerade Ausgestaltung des Verbindungselements 30 im maximal ausgefahrenen Zustand gezeigt. In der Realität ist das Verbindungselement 30 aufgrund von Eigengewicht, Materialelastizitäten und Lagerspielen innerhalb der Segmente der Auszüge einem Durchhang unterworfen, so dass der von der Einrichtung zur optischen Längenmessung ausgesendete Messstrahl 50 nicht mehr auf den zu messenden Punkt, nämlich den Mittelpunkt des mobilen Lagerkugelkörpers 10 trifft, sondern diesen verfehlt. Wird der Messstrahl 50 dennoch reflektiert, ergibt sich aufgrund der Verdrehung des beweglich gelagerten Lagerkugelkörpers 10 in Verbindung mit dem Versatz des Auftreffpunktes des Messstrahls zu einer Längenabweichung von einigen Mikrometern, wenn der Lateralversatz oder die Durchbiegung im Bereich von einigen Millimetern liegt. Eine Korrektur ist bei einer nicht zentrischen Anordnung nur bedingt möglich, da der durch die Drehung entstandene Messfehler ggf. nicht bekannt ist und nicht ermittelt werden kann.

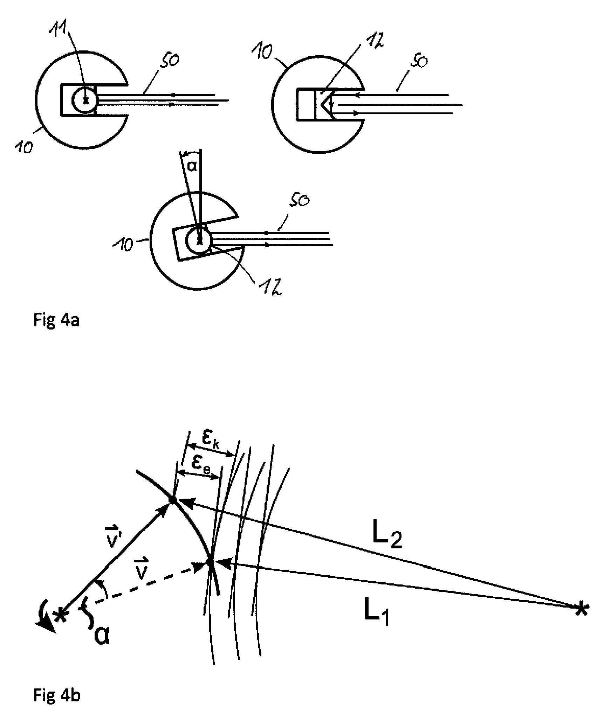

Die Ermittlung des Längenmessfehlers aufgrund der Exzentrizität eines Reflektors auf der Kugeloberfläche ist in der Figur 4b dargestellt. Bei einen nahezu senkrechten Auftreffen des Messstrahls ergibt sich eine Länge L1, wird der Reflektor um den Winkel α verdreht, ergibt sich eine Länge L2. Die Differenz beider Längen ergibt den Längenmessfehler.

In der Figur 4a ist die zentrale Anordnung einer Reflektoreinrichtung 12 innerhalb des Lagerkugelkörpers 10 gezeigt. Die linke obere Darstellung zeigt die Ausgestaltung der Reflektoreinrichtung 12 als sogenannten Katzenaugen-Reflektor, bei dem der Bezugspunkt für die optische Längenmessung mit dem Drehpunkt 11 des Drehgelenkes und damit mit dem Mittelpunkt des Lagerkugelkörpers 10 übereinstimmt. Die obere rechte Darstellung zeigt eine Ausgestaltung der Reflektoreinrichtung 12 als Tripelspiegelreflektor, dessen Bezugspunkt für die optische Längenmessung ebenfalls mit dem Drehpunkt des Drehgelenkes und dem Mittelpunkt des Lagerkugelkörpers 10 übereinstimmt. Beide Reflektoreinrichtungen sind so ausgebildet, dass sie in der Kugelmitte der Lagerkugelkörper 10 angebracht sind und so ausgerichtet und angeordnet sind, dass sie den einfallenden Messstrahl 50 unabhängig von der Ausrichtung der jeweiligen Reflektoreinrichtung 12 in die Einfallsrichtung reflektieren. Dies ist durch den jeweiligen Strahlengang angedeutet.

In der unteren Darstellung ist gezeigt, dass die Reflektoreinrichtung 12 auch bei einem Verdrehen des Lagerkugelkörpers 10 um den Winkel α den einfallenden Lichtstrahl stets parallel zu seiner einfallenden Richtung zurückwirft, bei einem nicht zentrischen Auftreffen des Messstrahls 50 wird dieser lediglich entsprechend stark parallel versetzt zurückgeworfen, ohne dass sich ein Längenmessfehler ergibt.

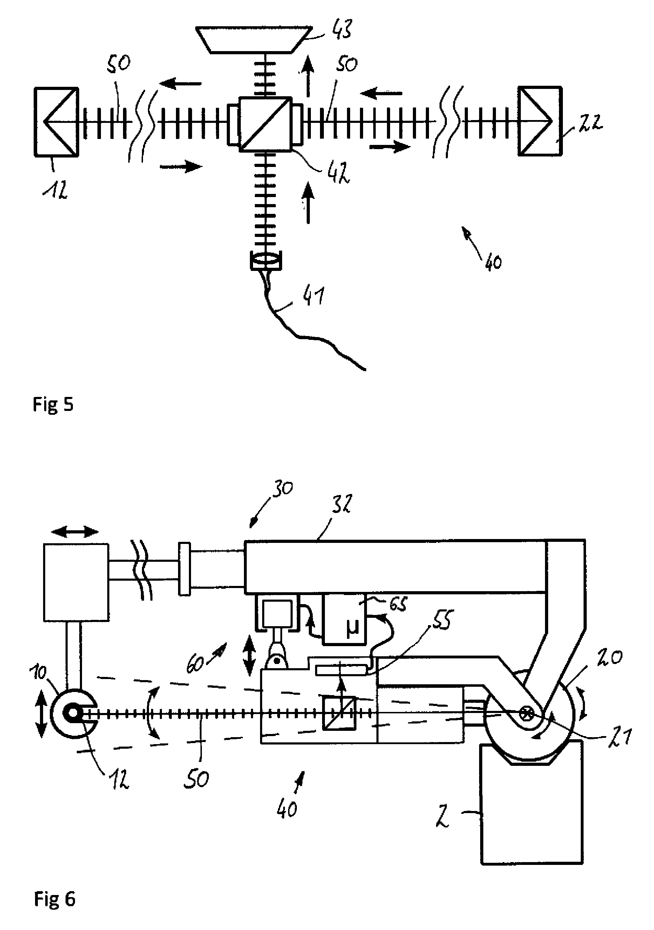

In der Figur 5 ist der Grundaufbau der Einrichtung 40 zur optischen Längenmessung in Gestalt eines Interferometers gezeigt. Eine solche Einrichtung 40 kann fest an dem Verbindungselement 30 montiert oder aber abnehmbar daran angeordnet sein, so dass eine Anpassung an unterschiedliche Messräume leicht erfolgen kann. Die Einrichtung 40 zur optischen Längenmessung weist einen Aufbau auf, der auf dem des Michelson-Interferometers basiert. Stabilisiertes, kohärentes Laserlicht wird über eine polarisationserhaltende Glasfaser 41 von außen zugeführt, so dass die Einrichtung 40 insgesamt kompakt aufgebaut werden kann. Ein polarisationsoptischer Strahlteilerwürfel 42 teilt das Laserlicht in einen Referenzstrahl und einen Messstrahl 50 auf. Weitere polaristionsoptische Bauteile sorgen dafür, dass der Messstrahl 50 zwischen den Reflektoreinrichtungen 12, 22 der beiden Lagerkugelkörper 10, 20 oder dem jeweiligen Referenzelement verläuft, so dass die Abstandsänderungen dieser Elemente 10, 20 mit hoher Auflösung und Genauigkeit gemessen werden. Der Messstrahl 50 wird direkt nacheinander zu den Lagerkugelkörpern 10, 20 geführt, bevor er sich mit dem Referenzstrahl überlagert und die sich ergebende Interferenz in einer optoelektronischen Einheit 43 ausgewertet wird. Bei der Auswertung der Intereferenz ergibt sich die Verschiebung der beiden Kugelzentren 11, 21 zueinander, wenn der bewegliche Lagerkugelkörper 10 entlang des Messstrahls bewegt wird.

In der Figur 6 ist eine Variante des Messgeräts schematisch dargestellt. Das Messgerät sieht dabei wie oben beschrieben zwei Lagerkugelkörper 10, 20 vor, von denen nur die Lagerung in dem Drehlager 2 an einem Ort innerhalb des Messraumes einer positionierenden Maschine dargestellt ist. Der Messstrahl 50 wird auf die Reflektoreinrichtung 12 innerhalb des beweglichen Lagerkugelkörpers 10 gerichtet und reflektiert und in der Einheit 40 ausgewertet. Zusätzlich zu der Längenbestimmung innerhalb der Einrichtung 40 über eine nicht näher dargestellte optoelektronische Einheit ist eine Photodetektoreinheit 55 vorgesehen, der einen Teil des reflektierten Messstrahls zugeleitet wird. Die Photodetektoreinheit 55 ist positionsempfindlich und gibt ein Regelsignal für die Nachführung des Messstrahls 50 aus. Dieses wird an eine Steuereinrichtung 65 geleitet, die einen Aktuator 60 ansteuert. Über den Aktuator 60 wird die Einrichtung 40 zur optischen Längenmessung in zwei Winkeln so nachgeführt, dass der Messstrahl 50 nach Möglichkeit zentrisch zur Reflektoreinheit in den beweglichen Lagerkugelkörper 10 ausgerichtet ist. Der Drehpunkt der Nachführung ist dabei idealerweise der Drehpunkt 21 des stationären Drehgelenks, also der Mittelpunkt des Lagerkugelkörpers 20, in dem auch die zweite Reflektoreinrichtung angeordnet ist. Über die Auswertung des reflektierten Messstrahls 50 aus seiner Nulllage heraus auf der Photodetektoreinheit 55 können beispielsweise zwei motorische Nachführungen geregelt werden, die die Winkelbewegung der Einrichtung 40 bewirken, um die Fehlausrichtung des Messstrahls auszugleichen und Längenmessfehler aufgrund des Lateralversatzes des Lagerkugelkörpers 10 auszuschließen. Der Figur 6 ist zu entnehmen, dass der Aktuator 60 an dem Verbindungselement 30, genauer an dem ersten Segment 32, befestigt ist und nicht von dem stationären Lagerkugelkörper 20 verschoben wird, wenn das Verbindungselement 30 teleskopiert wird. Der Aktuator folgt somit den Bewegungen des Verbindungselementes 30 während der Messsungen, eine Verstellung erfolgt über eine Verschwenkung der Einrichtung 40 um eine Schwenkachse, die durch den Drehpunkt 21 des Lagerkörpers 20 verläuft.

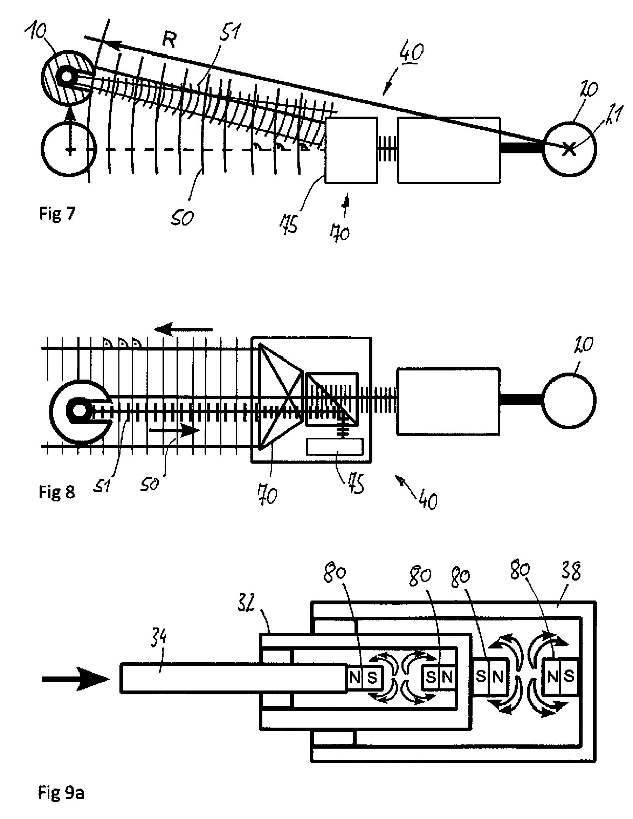

Eine Variante des Messgeräts ist in der Figur 7 dargestellt. Der ausgesendete Messstrahl 50 wird auf den Mittelpunkt 21 des stationären Lagerkugelkörpers 20 fokussiert, so dass der Messstrahl 50 als eine Kugelwelle, also ein sich aufweitender Strahl in Richtung des beweglichen Lagerkugelkörpers 10 ausbreitet. Dadurch erhöht sich die laterale Toleranz der Lage des beweglichen Lagerkugelkörpers 10, da auch die Abstandsänderung bei einer lateralen Verschiebung interferometrisch exakt erfasst wird. Durch die konzentrisch angeordnete Reflektoreinrichtung im Inneren des Lagerkugelkörpers 10 wird ein Teilausschnitt, solange sich der Lagerkugelkörper 10 innerhalb des aufgeweiteten Messstrahls 50 befindet, in Richtung auf den stationären Lagerkugelkörper 20 zurückgeworfen. Die Aufweitung erfolgt in einem weiteren optischen Bauteil 70, das ein Teil der Einrichtung 40 zur optischen Längenmessung ist. An diesem Bauteil 70 kann eine Detektoreinrichtung 75 angeordnet sein, um den reflektierten Messstrahl 51 zu erfassen.

Eine weitere Variante der Erfindung ist in der Figur 8 dargestellt, bei der durch eine geeignete optische Einrichtung 70 der Messstrahl 50 derart aufgeweitet wird, dass eine ebene Welle auf die Reflektoreinrichtung 12 in dem beweglichen Lagerkugelkörper auftrifft. Von dort wird ein Teilausschnitt des Messstrahls als reflektierter Messstrahl 51 parallel zu dem einfallenden Messstrahl 50 auf die Einrichtung 40 zurückgeworfen und mit einer positionsempfindlichen Detektoreinheit 75, die beispielsweise als Photodiode ausgebildet sein kann, registriert. Der durch den Versatz verursachte Längenmessfehler wird in der Steuerungssoftware oder in der Messsoftware hinreichend genau korrigiert.

Lateralversätze und Drehbewegungen der Reflektoreinheit 12 am Endeffektor des Teleskopauszuges aufgrund mechanischer Verformungen können automatisch ausgeregelt werden, durch die Laserstrahlgeometrie vermieden werden oder durch Kenntnis des Lateralversatzes korrigiert werden, wobei gleichzeitig das ggf. erforderliche manuelle Feinausrichten des Messstrahls 50 vollständig entfällt. Dadurch können Mehrfachauszüge verwendet werden, da eine hohe mechanische Steifigkeit der Linearführung zum Erreichen kleiner Messunsicherheiten nicht mehr erforderlich ist. Ebenso ist es möglich, einen jeweils für die Messanforderungen ideal geeigneten Teleskopauszug als Verbindungselemente 30 zu verwenden, wenn die Einheit 40 zur optischen Längenmessung und Strahlnachführung von dem Verbindungselement 30 mittels einer geeigneten mechanischen Koppelvorrichtung abnehmbar ist und auf andere Teleskopauszüge aufgesetzt werden kann. Mit einer stationären Vorrichtung wäre ein Betrieb der Längenmesseinrichtung auch ohne Verbindungselement möglich.

Durch die konzentrische Anordnung der optischen Reflektoreinheiten 12, 22 in den Mittelpunkten 11, 21 der Lagerkugelkörper 10, 20 wird der sogenannte Sinus- und Kosinusfehler vermieden, da die Messstrecke der direkten Verbindungslinien beider Referenzpunkte, hier die der Mittelpunkte 11, 21 entspricht. Die zentrische Anordnung erlaubt zudem eine freie thermische Ausdehnung des Messgerätes, da die Messstrecke zwischen den beiden Referenzpunkten 11, 22 unabhängig davon ist. Dadurch ist es möglich, für das Messgerät ein sehr breites Materialspektrum einzusetzen und die Auszugslängen des Verbindungselementes 30 den messtechnischen Gegebenheiten optimal anzupassen, ohne dabei deren Funktion zu beeinträchtigen.

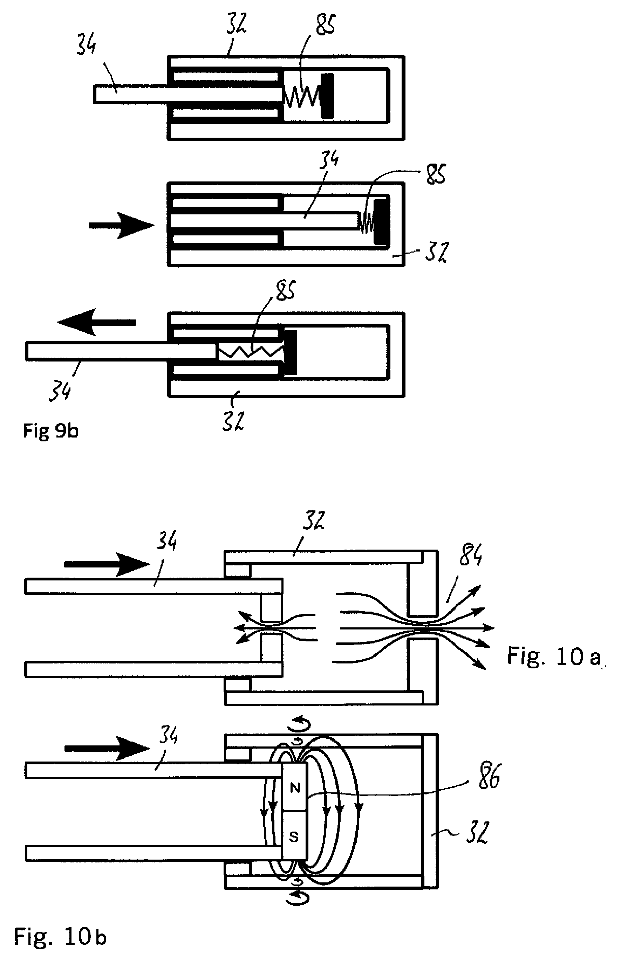

In der Figur 9a ist eine Querschnittsdarstellung durch einen Teleskopauszug mit Teleskopsegmenten 38, 32, 34 gezeigt. An den rückwärtigen Endbereichen der aufgenommenen Auszugselemente 32, 34 sind Permanentmagnete 80 angeordnet, denen auf der Innenseite der aufnehmenden Auszugselemente 32, 38 gleichpolig gegenüberliegend angeordnete Permanentmagnete gegenüberliegen. Durch diese Anordnung der Permanentmagnete 80 innerhalb der Auszüge wird ein harter Endanschlag der einzelnen Segmente bei einer entsprechenden Auszugslänge und Verfahrbewegung des Verbindungselementes 30 verhindert. Permanentmagnete haben den Vorteil einer progressiven Kraft-Weg-Kennlinie bei ihrer Annäherung und können mit einem geringen Bauaufwand innerhalb der Teleskopführungen angeordnet werden.

Eine alternative Ausgestaltung eines Endanschlages ist in der Figur 3b gezeigt, bei der eine Druckfeder 85 ein zu hartes Auftreffen des aufgenommenen Segmentes 34 in dem aufnehmenden Segment 32 verhindert. Darüber hinaus kann die Auszugsbewegung durch die Feder 85 in beiden Auszugsrichtungen gedämpft werden, was in der unteren Darstellung gezeigt ist.

Eine Bewegungsdämpfung ist in den Figuren 10a und 10b dargestellt. In den Endbereichen der einzelnen Teleskopsegmente 32, 34 sind Luftöffnungen 84, gegebenenfalls mit einem variablen Durchmesser angeordnet, um ein ruckartiges Herunterfallen einzelner Segmente bei einem Wechsel der Orientierung des Messgerätes beispielsweise von einer waagerechten Position in eine senkrechte Position zu vermeiden. Die Dämpfung wird durch die Ausgestaltung geschlossener, rohrförmig ausgebildeter Teleskopsegmente mit darin befindlichen Luftöffnungen realisiert. Eine alternative Ausgestaltung der Dämpfung kann über Magnete und einen Wirbelstromeffekt in den gegenläufigen Auszugselementen 32, 34 realisiert werden. Die Dämpfung über Magnete 86 und den Wirbelstromeffekt kann geschwindigkeitsproportional erfolgen.

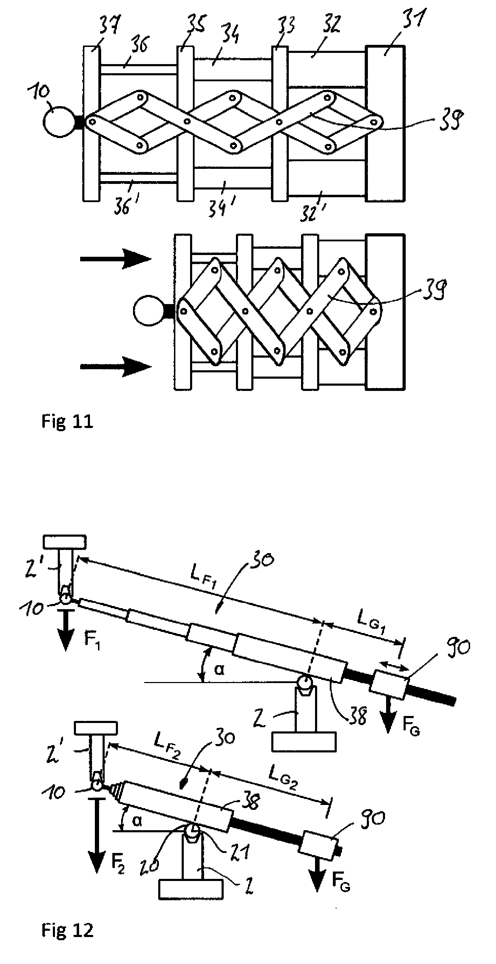

In der Figur 11 ist ein Verbindungselement 30 mit zwei Teleskopauszügen mit verschiedenen Segmenten 36, 34, 32, 36', 34', 32' dargestellt. Der Aufbau entspricht ungefähr dem der Figur 1. Zwischen den Querstreben 31, 33, 35, 37 ist eine Scherenkinematik 39 angeordnet, um einen gekoppelten Auszug der einzelnen Segmente 32, 34, 36 des dargestellten Mehrfachauszuges zu ermöglichen. Durch den gekoppelten oder geordneten Auszug kann auf Endanschläge oder eine Bewegungsdämpfung verzichtet werden, da stets eine definierte Zuordnung der Abstände der einzelnen Auszugssegmente zueinander und der Querstreben 31, 33, 35, 37 zueinander durch die mechanische Kopplung der Scherenkinematik 39 gewährleistet ist. Es müssen lediglich Endanschläge beim Erreichen des maximalen oder minimalen Verfahrbereiches vorgesehen sein; wenn man ein komplettes Herausziehen und/oder Einschieben beispielsweise durch die Positioniermaschine verhindern kann, kann auf die Endanschläge auch verzichtet werden. Alternative Kopplungen können über Zahnräder und Zahnstangen oder Seilzüge und Umlenkrollen erfolgen.

In der Figur 12 ist ein Messgerät mit einem Gegengewicht 90 an dem überkragenden Segment 38 oder Segmentabschnitt dargestellt. Durch die unterschiedliche räumliche Ausrichtung des Messgerätes, wird der Endeffektor, an dem der bewegliche Lagerkugelkörper 10 angeordnet ist, über das Drehgelenk 2' mit unterschiedlichen Kräften belastet, die dann auf die zu kalibrierende Positioniermaschine einwirken, wenn kein Ausgleich erfolgt. Zum Ausgleich sind gemäß Fig. 12 Gegengewichte 90 auf der entgegengesetzten Seite des feststehenden Drehgelenks 2 angeordnet. Idealerweise wird der Abstand der Gegengewichte 90 vom Drehpunkt 21 automatisch derart eingestellt, dass die sonst wechselnde Krafteinwirkung am Endeffektor auf die zu kalibrierende Positioniermaschine konstant und/oder nahe Null gehalten wird. Dies kann durch eine rein mechanische Vorrichtung erreicht werden, die mit dem Endeffektor in mechanischer Weise gekoppelt ist. Alternativ kann eine motorische Einheit, die den notwendigen Abstand des Gegengewichts 90 zum Drehpunkt 21 aus der aktuellen Auszugslänge und gegebenenfalls den Neigungswinkel ermittelt, eingestellt werden. Eine weitere Möglichkeit bieten Kraftsensoren, die in dem Endeffektor der Positioniermaschine integriert sein können, womit eine unabhängige, elektronische Regelstrecke realisiert werden kann, die sich stets auf eine konstante Krafteinwirkung auf die Positioniermaschine einregelt.

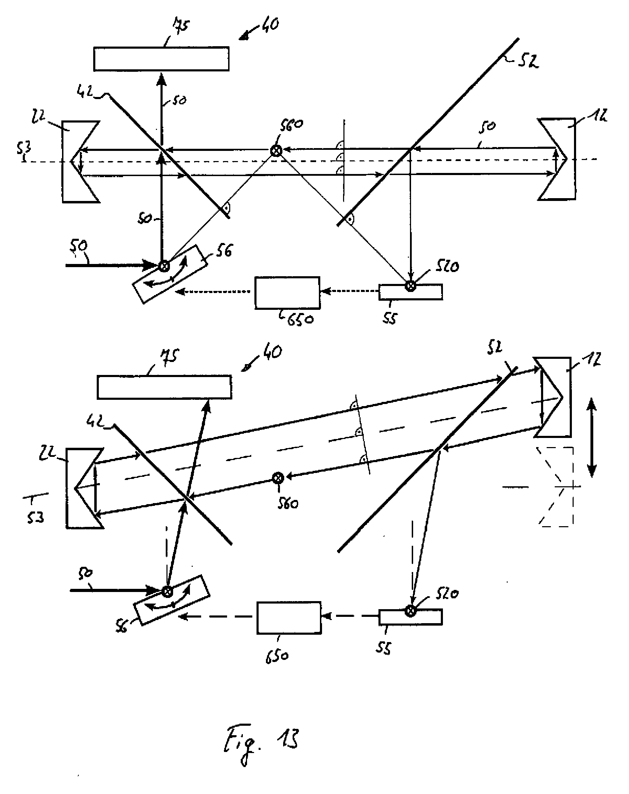

In der Figur 13 ist eine Variante der Erfindung beschrieben, mit der sich durch eine geregelte Nachführung des Messstrahls 50 eine stets fehlerfreie Messung des relativen Abstandes zweier Mittelpunkte von optischen Retroreflektoren 12, 22, beispielsweise bei einem Teleskopkugelstab, verwirklichen lässt. Anders als bei der Ausführungsform gemäß Figur 6, bei der eine Nachführung einer mechanischen Einrichtung erfolgen muss, sieht die Vorrichtung gemäß Figur 13 nur die Nachführung des Messstrahls 50 vor, wobei in der Ausführungsform gemäß Figur 13 die Nachführung des Messstrahls 50 bei einer feststehenden Auswerteeinheit 40 erfolgt. Darüber hinaus ist es bei einer Vorrichtung gemäß der Figur 13 nicht mehr erforderlich, dass bei der Nachführung die Drehung zur Erreichung einer lateralen Auslenkung des Messstrahls 50 im Drehpunkt des Drehgelenkes erfolgt, vielmehr erfolgt die Nachführung des Messstrahls 50 durch eine Strahlablenkeinheit 56, die beispielsweise als ein elektromechanischer Kippspiegel realisiert ist.

Das schematisch dargestellte Messgerät gemäß Figur 13 sieht zwei Reflektoreinrichtungen 12, 22 vor, von denen die linke Reflektoreinrichtung 22 als feststehender Referenzreflektor in Gestalt eines optischen Retroreflektors ausgebildet ist. Die Reflektionsflächen des Retroreflektors 22 stehen dabei bevorzugt rechtwinklig aufeinander, wobei bei sogenannten CatsEye-Reflektoren diese geometrische Zuordnung nicht erforderlich ist.

Der feststehende Referenzreflektor 22 ist dabei so angeordnet, dass der Bezugspunkt für die optische Längenmessung mit dem Drehpunkt eines Drehgelenkes, in dem der optische Retroreflektor 22 angeordnet ist, übereinstimmt. Der zweite Messreflektor 12 kann an einem zweiten Lagerkugelkörper angeordnet oder darin befestigt sein.

Ein Messstrahl 50 in Gestalt eines Laserstrahls wird von außen zugeführt, wobei der Messstrahl 50 im dargestellten Ausführungsbeispiel parallel zu einer Verbindungslinie 53 zwischen den beiden Messreflektoren 22, 12 in nicht ausgelenkter Position, also in der Ausgangslage ohne Versatz, orientiert ist. Die Ausgangslage ist diejenige Position, die in der oberen Darstellung der Figur 13 gezeigt ist. Grundsätzlich sind auch alternative Orientierungen des von außen zugeführten Messstrahls 50 möglich, beispielsweise rechtwinkelig zu der Verbindungslinie 53. Die in der Figur 13 gewählte Anordnung der Komponenten ist für eine vereinfachte Darstellung gewählt und weist viele rechtwinkelige Orientierungen der Komponenten zueinander auf. Dies ist aber nicht notwendig, der Winkel des Messstrahls 50 wird durch eine Nachregelung stets richtig auf den Messreflektor 12 ausgerichtet, beispielsweise auch schräg, falls der Messreflektor seitlich bewegt wird.

Der von außen zugeführte Messstrahl 50 wird in eine Strahlablenkeinheit 56 eingekoppelt, die zum Beispiel als elektromechanischer Kippspiegel realisiert ist. Dadurch ist es möglich, den Messstrahl 50, beispielsweise einen Laserstrahl, in verschiedenen Winkeln in den Messarm einzukoppeln. In der oberen Darstellung, in der sich der Messreflektor 12 in der Nulllage oder Ausgangslage befindet, wird der Messstrahl 50 rechtwinkelig zu der Verbindungslinie 53 und zu der Längserstreckung des Messarm umgelenkt. Zum Einkoppeln oder Einspiegeln in Richtung der Längserstreckung des Messarms wird ein erster Strahlteiler 42 verwendet, so dass ein Teil des Messstrahls als Referenzstrahl durch den Strahlteiler 42 geht. Der eingespeiste Laserstrahl, der durch die Strahlablenkeinheit 56 auf den Strahlteiler 42 abgelenkt wird, geht mit einem Teil des Laserstrahls als Referenzstrahl durch den ersten Strahlteiler 42 hindurch und trifft direkt auf die optoelektronische Einheit 75 zur Erfassung der Längenmesswerte. Der übrige Teil des Messstrahls 50 wird zunächst außermittig zu dem Referenzreflektor 22 und von dort zu dem Messreflektor 12 geführt. Der in dem Reflektor 12, 22 abgelenkte Messstrahl wird parallel und versetzt zu der Eingangsrichtung umgelenkt und zurückgeworfen. Hierzu werden polarisationsoptische Komponenten verwendet. Von dem Messreflektor 12 trifft der Messstrahl 50 auf einen zweiten Strahlteiler 52, der den Messstrahl teilweise zu einer optoelektronischen Photodetektoreinheit 55, zum Beispiel in Gestalt einer positionssensitiven Diode führt. Der Rest des Messstrahls 50 kehrt zum ersten Strahlteiler 42 zurück und wird von dort aus dem Messarm ausgekoppelt, wobei er sich mit dem durchgehenden Referenzstrahl überlagert und auf die optoelektronische Einheit 75 auftrifft, wo die Längeninformation interferometrisch in der Einrichtung 40 zur optischen Längenmessung ausgewertet wird.

In der unteren Darstellung der Messeinrichtung in der Figur 13 ist die ausgelenkte Position des Messreflektors 12 gezeigt. Der eingespiegelte Laserstrahl 50 wird durch den ersten Strahlteiler 42 teilweise auf den Referenzreflektor 22 abgelenkt und geht teilweise direkt auf die optoelektronische Einheit zur Erfassung der Längenmesswerte 75. Von dem Referenzreflektor 22 wird der Messstrahl 50 auf den zu der Ausgangsposition lateral versetzten Messreflektor 12 geworfen und von dort parallel zurück auf den zweiten Strahlteiler 52 zum Auskoppeln des Messstrahls 50 zur Bestimmung des Reflektorversatzes. Ein Teil des Messstrahls 50 wird auf die optoelektronische Photodetektoreinheit 55 in Gestalt der positionssensitiven Diode geworfen, der Rest des Strahls geht durch den zweiten Strahlteiler 52 hindurch und trifft auf den ersten Strahlteiler 42, von wo er aus dem Messarm ausgekoppelt und auf die optoelektronische Einheit 75 zur Erfassung der Längenmesswerte geworfen wird, um die Längeninformation interferometrisch zu erfassen. Der ausgekoppelte Messstrahl 50 wird dem Referenzstrahl überlagert.

In der unteren Darstellung der Figur 13 ist der Messreflektor 12 seitlich versetzt, jedoch kann auchhier die exakte Länge zwischen den beiden Reflektoren 12, 22 gemessen werden, da der Messstrahl 50 parallel zu der Verbindungslinie 53 der beiden Reflektoren 12, 22 verläuft, die Verbindungslinie 53 verläuft durch das Zentrum der Reflektoren. Ist der Messstrahl 50 nicht parallel ausgerichtet, so wird der Messstrahl 50 aus dem Nullpunkt 520 der positionssensitiven Diode 55 heraus wandern, was als Fehlersignal für die Nachregelung genutzt werden kann, bis der abgelenkte Messstrahl 50 wieder in dem Nullpunkt 520 auftrifft.

Bei dem in Figur 13 dargestellten Aufbau ist die positionssensitive Diode 55 in Strahlrichtung genau im zweifach gespiegelten Drehpunkt der Strahlablenkeinheit 56 angeordnet. Der Drehpunkt der Strahlablenkeinheit 56 als Abbildung des Drehpunktes an dem ersten Strahlteiler 42 ist mit dem Bezugszeichen 560 versehen, die zweite Abbildung an dem zweiten Strahlteiler 52 ist mit dem Bezugszeichen 520 versehen. Durch die Anordnung der positionssensitiven Diode 55 genau im zweifach gespiegelten Drehpunkt der Strahlablenkeinheit 56 und bei einer Justierung des lateralen Nullpunktes der positionssensitiven Diode 55 auf die laterale Position des zweifach gespiegelten Drehpunktes, wird ein auf diesen Regelpunkt eingestellter Regelkreis den Messsstrahl 50 stets elektronisch so nachführen, dass sich der Messstrahl 50 parallel zu der Verbindungslinie 53 der beiden Retroreflektoren 12, 22 ausbreitet und sich dann wieder exakt mit dem durch den ersten Strahlteiler 52 hindurchgehenden Referenzstrahl überlagert. Der Regelkreis wird durch eine Steuereinheit 650 geschlossen, die eine Nachführung des Laserstrahls durch Veränderung der Strahlablenkeinheit 56 bewirkt. Die Steuereinheit 650 ist mit der Strahlablenkeinheit 56 gekoppelt, um die Verstellung zu realisieren. Die beiden Strahlteiler 42, 52 sind im dargestellten Ausführungsbeispiel senkrecht zueinander orientiert. Der virtuelle Drehpunkt 520 ist der an den Strahlteilern 42, 52 doppelt gespiegelter Drehpunkt der Ablenkeinrichtung 56 und dient als Nullpunkt oder Ausgangspunkt für die Regelung der Nachführung des Messstrahls 50 durch die Steuereinheit 650. Durch die Ablenkeinrichtung 56 wird der Messstrahl 50 stets so nachgeführt, dass der Messstrahl 50 parallel zu der Verbindungslinie 53 der optischen Zentren der Reflektoren 12, 22 verläuft.

Durch die prinzipbedingte Parallelität des Messstrahls 50 zu der Verbindungslinie 53 aufgrund der Ausgestaltung der Reflektoren ist somit bei aktiver Strahlnachführung eine fehlerfreie, relative Längenmessung gewährleistet. Durch die exakte Überlagerung der Strahlen ist stets ein kontrastreiches Interferometersignal vorhanden. Der Aufbau des Messgerätes erfordert zur korrekten Funktion lediglich eine einmalige Einstellung des lateralen Nullpunktes der positionssensitiven Diode 55, was elektronisch sehr präzise erfolgen kann. Die geometrische Anordnung der übrigen Komponenten lässt vergleichsweise hohe Toleranzen zu, ohne die Funktionalität des Messsystems insgesamt einzuschränken.

## Patentansprüche

1. Messgerät zur Überprüfung positionierender Maschinen auf geometrische Fehler zwischen zwei Drehgelenken (2), das Messgerät umfassend:
- zwei Lagerkugelkörper (10, 20),
- ein teleskopierbares Verbindungselement (30),
wobei die Lagerkugelkörper (10, 20) über das teleskopierbare Verbindungselement (30) mechanisch miteinander verbunden sind und mit geeigneten Lagerungen Drehgelenke (2) bilden, wobei die Drehpunkte den Mittelpunkten der Lagerkugelkörper (10, 20) entsprechen,
- eine Einrichtung (40) zur optischen Längenmessung des Abstandes der Lagerkugelkörper (10, 20) voneinander, die zumindest eine Reflektoreinrichtung (12, 22) und einen Messstrahls (50) aufweist,
wobei die zumindest eine Reflektoreinrichtung (12, 22) in einem ersten der beiden Lagerkugelkörper (10) dergestalt angeordnet ist, dass ein Bezugspunkt für die optische Längenmessung mit dem Mittelpunkt des ersten Lagerkugelkörpers (10) übereinstimmt,
das Messgerät weiterhin umfassend
- eine Steuereinrichtung (65),
- eine dieser zugeordnete Photodetektoreinheit (55) und
- zumindest eine optische Ablenkeinrichtung (56), die dem Messstrahls zugeordnet ist,
- wobei die Steuereinrichtung (65) dazu eingerichtet ist, die Ablenkeinrichtung (56) basierend auf dem Signal der Photodetektoreinheit (55) so zu steuern, dass der Messstrahl (50) der Reflektoreinrichtung (12, 22) nachgeführt wird, wenn diese aus einer Ausgangslage verlagert wird.

2. Messgerät nach Anspruch 1, **dadurch gekennzeichnet, dass** in beiden Lagerkugelkörpern (10, 20) eine Reflektoreinrichtung (12, 22) dergestalt angeordnet ist, dass die Bezugspunkte für die optische Längenmessung mit den Mittelpunkten (11, 21) der Lagerkugelkörper (10,20) übereinstimmen.

3. Messgerät nach Anspruch 1 oder 2, **dadurch gekennzeichnet, dass** der Messstrahls (50) auf den Mittelpunkt des zweiten Lagerkugelkörpers (20) fokussiert ist.

4. Messgerät nach einem der voranstehenden Ansprüche, **dadurch gekennzeichnet, dass** das Messgeräts eine Einrichtung (70) aufweist, die in dem Messstrahl (50) zur Aufweitung des Messstrahls (50) angeordnet und der Messstrahl (50) zu einer Kugelwelle mit dem Mittelpunkt in einem Mittelpunkt (21) des zweiten Lagerkugelkörpers (20) oder als paralleler Messstrahl (50) aufgeweitet ist.

5. Messgerät nach Anspruch 4, **dadurch gekennzeichnet, dass** die Photodetektoreinheit eine in dem Strahlengang des reflektierten Messstrahls angeordnete positionsempfindliche Detektoreinrichtung (75) ist.

6. Messgerät nach einem der voranstehenden Ansprüche, **dadurch gekennzeichnet, dass** das teleskopierbare Verbindungselement (30) mehrere, parallel zueinander angeordnete Auszüge (32, 32', 34, 34', 36, 36', 38, 38') aufweist.

7. Messgerät nach Anspruch 6, **dadurch gekennzeichnet, dass** zwei parallele Auszüge (32, 32', 34, 34', 36, 36') über eine Scherenkinematik (39) miteinander gekoppelt sind.

8. Messgerät nach einem der voranstehenden Ansprüche, **dadurch gekennzeichnet, dass** das Verbindungselement (30) eine Dämpfereinrichtung (84, 86) aufweist.

9. Messgeräts nach einem der voranstehenden Ansprüche, **dadurch gekennzeichnet, dass** das Messgerät eine Feder (85) oder gleichpolig zueinander ausgerichtete Magnete (80) aufweist, die an dem Verbindungselement (30) als Endanschlag angeordnet sind.

10. Messgeräts nach einem der voranstehenden Ansprüche, **dadurch gekennzeichnet, dass** das Messgerät ein Gegengewicht (90) aufweist, das auf der dem teleskopierbaren Drehlager (2) abgewandten Seite angeordnet ist.

11. Messgerät nach einem der voranstehenden Ansprüche, **dadurch gekennzeichnet, dass** die Ablenkeinrichtung (56) als verschwenkbarer oder verschieblicher Spiegel ausgebildet ist.

12. Messgerät nach einem der Ansprüche 5 bis 11, **dadurch gekennzeichnet, dass** die Steuereinrichtung (650) mit einem der Ablenkeinrichtung (56) zugeordneten Aktuator und der positionssensitiven Detektoreinheit (55) gekoppelt ist, um eine Nachführung des Messstrahls (50) durch Verstellung der Ablenkeinrichtung (56) in Abhängigkeit von Sensorwerten der Detektoreinheit (55) zu steuern.

13. Messgerät nach einem der Ansprüche 5 bis 12, **dadurch gekennzeichnet, dass** die positionssensitive Detektoreinheit (55) des Messstrahls im doppelt gespiegelten Drehpunkt der Ablenkeinrichtung (56) angeordnet ist.

14. Messgerät nach einem der Ansprüche 12 oder 13, **dadurch gekennzeichnet, dass** dem Messstrahls (50) der Aktuator (60) zugeordnet ist, um eine Nachführung für laterale Auslenkungen vorzunehmen, wobei der Drehpunkt der Nachführung in dem Mittelpunkt (21) des Lagerkugelkörpers (20) liegt.

## Claims

1. Measuring device for checking positioning machines for geometric errors between two rotational joints (2), the measuring device comprising:
- two bearing ball elements (10, 20),
- a telescopic connecting element (30), wherein the bearing ball elements (10, 20) are connected mechanically to each other via the telescopic connecting element (30) and, together with suitable mountings, form rotational joints (2), the pivot points corresponding to the centre points of the bearing ball elements (10, 20),
- an apparatus (40) for the optical length measurement of the spacing of the bearing ball elements (10, 20) from each other, which has at least one reflector apparatus (12, 22) and a measuring beam (50),
wherein the at least one reflector apparatus (12, 22) is arranged in a first of the two bearing ball elements (10) in such a way that a reference point for the optical length measurement coincides with the centre point of the first bearing ball element (10),
the measuring device further comprising
- a control apparatus (65),
- a photodetector unit (55) assigned to the latter, and
- at least one optical deflection apparatus (56), which is assigned to the measuring beam,
- wherein the control apparatus (65) is configured to control the deflection apparatus (56) on the basis of the signal from the photodetector unit (55) such that the measuring beam (50) tracks the reflector apparatus (12, 22) when the latter is displaced from an initial position.

2. Measuring device according to Claim 1, **characterized in that** a reflector apparatus (12, 22) is arranged in both bearing ball elements (10, 20) in such a way that the reference points for the optical length measurement coincide with the centre points (11, 21) of the bearing ball elements (10, 20).

3. Measuring device according to Claim 1 or 2, **characterized in that** the measuring beam (50) is focused on the centre point of the second bearing ball element (20).

4. Measuring device according to one of the preceding claims, **characterized in that** the measuring device has an apparatus (70) which is arranged in the measuring beam (50) in order to widen the measuring beam (50), and the measuring beam (50) is widened to form a spherical wave with the centre point at a centre point (21) of the second bearing ball element (20) or as a parallel measuring beam (50).

5. Measuring device according to Claim 4, **characterized in that** the photodetector unit is a position-sensitive detector apparatus (75) arranged in the beam path of the reflected measuring beam.

6. Measuring device according to one of the preceding claims, **characterized in that** the telescopic connecting element (30) has a plurality of pull-out sections (32, 32', 34, 34', 36, 36', 38, 38') arranged parallel to one another.

7. Measuring device according to Claim 6, **characterized in that** two parallel pull-out sections (32, 32', 34, 34', 36, 36') are coupled to one another via a scissors mechanism (39).

8. Measuring device according to one of the preceding claims, **characterized in that** the connecting element (30) has a damper apparatus (84, 86).

9. Measuring device according to one of the preceding claims, **characterized in that** the measuring device has a spring (85) or magnets (80) arranged with the same polarity in relation to one another, which are arranged on the connecting element (30) as an end stop.

10. Measuring device according to one of the preceding claims, **characterized in that** the measuring device has a counterweight (90), which is arranged on the side facing away from the telescopic rotational bearing (2).

11. Measuring device according to one of the preceding claims, **characterized in that** the deflection apparatus (56) is formed as a pivotable or displaceable mirror.

12. Measuring device according to one of Claims 5 to 11, **characterized in that** the control apparatus (650) is coupled to an actuator assigned to the deflection apparatus (56) and to the position-sensitive detector unit (55) in order to control the tracking of the measuring beam (50) by adjusting the deflection apparatus (56) as a function of sensor values from the detector unit (55).

13. Measuring device according to one of Claims 5 to 12, **characterized in that** the position-sensitive detector unit (55) of the measuring beam is arranged at the twice-mirrored pivot point of the deflection apparatus (56).

14. Measuring device according to either of Claims 12 and 13, **characterized in that** the actuator (60) is assigned to the measuring beam (50) in order to perform tracking for lateral deflections, the pivot point of the tracking being located at the centre point (21) of the bearing ball element (20).

## Revendications

1. Appareil de mesure pour le contrôle de machines de positionnement quant à des erreurs géométriques entre deux articulations rotatives (2), l'appareil de mesure comprenant :
- deux corps de rotule de montage (10, 20),
- un élément de liaison télescopique (30),
dans lequel les corps de rotule de montage (10, 20) sont reliés l'un à l'autre mécaniquement via l'élément de liaison télescopique (30) et forment des articulations rotatives (2) avec des paliers appropriés, dans lequel les centres de rotation correspondent aux centres des corps de rotule de montage (10, 20),
- un système (40) pour la mesure de longueur optique de la distance des corps de rotule de montage (10, 20) l'un par rapport à l'autre, qui comprend au moins un dispositif réflecteur (12, 22) et un rayon de mesure (50),
dans lequel ledit au moins un dispositif réflecteur (12, 22) est agencé dans un premier des deux corps de rotule de montage (10) de telle façon qu'un point de référence pour la mesure de longueur optique coïncide avec le centre du premier corps de rotule de montage (10),
l'appareil de mesure incluant en outre
- un dispositif de commande (65),
- une unité à photodétecteur (55) associée à celui-ci, et
- au moins un dispositif à déflexion optique (56), qui est associé au rayon de mesure,
- dans lequel le dispositif de commande (65) est conçu pour piloter le dispositif à déflexion (56) en se basant sur le signal de l'unité à photodétecteur (55), de telle façon que le rayon de mesure (50) est amené à suivre le dispositif réflecteur (12, 22) quand celui-ci est déplacé depuis une position de départ.

2. Appareil de mesure selon la revendication 1, **caractérisé en ce qu'**un dispositif réflecteur (12, 22) est agencé dans les deux corps de rotule de montage (10, 20) de telle façon que les points de référence pour la mesure de longueur optique coïncident avec les centres (11, 21) des corps de rotule de montage (10, 20).

3. Appareil de mesure selon la revendication 1 ou 2, **caractérisé en ce que** le rayon de mesure (50) est focalisée sur le centre du second corps de rotule de montage (20).

4. Appareil de mesure selon l'une des revendications précédentes, **caractérisé en ce que** l'appareil de mesure comprend un système (70), qui est agencé dans le rayon de mesure (50) pour élargir le rayon de mesure (50), et le rayon de mesure (50) est élargi en donnant une onde sphérique dont le centre est au centre (21) du second corps de rotule de montage (20), ou en donnant un rayon de mesure parallèle (50).

5. Appareil de mesure selon la revendication 4, **caractérisé en ce que** l'unité à photodétecteur est un système détecteur (75) sensible à la position et agencé dans le trajet du rayon de mesure réfléchi.

6. Appareil de mesure selon l'une des revendications précédentes, **caractérisé en ce que** l'élément de liaison télescopique (30) comprend plusieurs éléments déployables (32, 32', 34, 34', 36, 36', 38, 38') agencés parallèlement les uns aux autres.

7. Appareil de mesure selon la revendication 6, **caractérisé en ce que** deux éléments déployables parallèles (32, 32', 34, 34', 36, 36') sont couplés l'un à l'autre via un système cinématique à parallélogramme (39).

8. Appareil de mesure selon l'une des revendications précédentes, **caractérisé en ce que** l'élément de liaison (30) comprend un dispositif d'amortissement (84, 86).

9. Appareil de mesure selon l'une des revendications précédentes, **caractérisé en ce que** l'appareil de mesure comprend un ressort (85) ou des aimants (80) orientés avec la même polarité les uns vers les autres, qui sont agencés sur l'élément de liaison (30) à titre de butées finales.

10. Appareil de mesure selon l'une des revendications précédentes, **caractérisé en ce que** l'appareil de mesure comprend un contrepoids (90), qui est agencé sur le côté détourné du palier rotatif (2) télescopique.

11. Appareil de mesure selon l'une des revendications précédentes, **caractérisé en ce que** le dispositif de déflexion (56) est réalisé sous forme de miroir capable de pivoter ou capable de translation.

12. Appareil de mesure selon l'une des revendications 5 à 11, **caractérisé en ce que** le dispositif de commande (650) est couplé avec un actionneur associé au dispositif de déflexion (56) et avec l'unité de détection sensible à la position (55), afin de commander un suivi du rayon de mesure (50) par déplacement du dispositif de déflexion (56) en fonction de valeurs de détection de l'unité à détecteur (55).

13. Appareil de mesure selon l'une des revendications 5 à 12, **caractérisé en ce que** l'unité à détecteur sensible à la position (55) du rayon de mesure est agencé au centre de rotation doublement spécularisé du dispositif de déflexion (56).

14. Appareil de mesure selon l'une des revendications 12 ou 13, **caractérisé en ce que** l'actionneur (60) est associé au rayon de mesure (50), afin de procéder à un suivi pour des déflexions latérales, et le centre de rotation du suivi se trouve au centre (21) du corps de rotule de montage (20).
